# EUROPEAN PATENT APPLICATION

(11) **EP 2 108 280 A1**
(43) Date of publication of application: **14.10.2009**
(21) Application number: 08711186.0
(22) Date of filing: 13.02.2008
(51) Int. Cl.: A46B 7/10

(54) **PROCESS FOR PRODUCING MATERIAL SHEET FOR ROTARY TOOTHBRUSH**

(71) Applicant: Fujita, Hiromi, Tsushima-shi, Nagasaki 817-0322 (JP)
(72) Inventor: FUJITA, Hiromi, Tsushima-shi Nagasaki 817-0322 (JP)
(74) Representative: Ellis, Katherine Elizabeth Sleigh
(86) International application number: PCT/JP2008/052328
(87) International publication number: WO 2009/101675

(57) **Abstract**

A method of manufacturing a sheet-like bristle unit for a rotating brush having a circular hub that has been ring-reinforced.

The method comprises steps of grasping a plurality of bristle sets comprising a number of fibre strands made from a thermoplastic resin aggregated as a tuft by a chuck; penetrating a predetermined amount of the bristle sets downwardly into a hole arranged at a die to be held; spreading the bristle sets in a radial fashion by pushing a punch having a diameter extending head into the bristle sets through the hole arranged at a welder provided at the lower part of the die; lifting the welder from the position beneath the centre part of the spread bristle sets; adhering the centre part of the bristle sets and an opposing part of a distance ring wherein the centre part of the spread bristle sets are overlapped with the ring made from a thermoplastic resin provided on the top surface of the welder to form a circular hub ring-reinforced at the centre of the bristle sets, and cutting the elementary part of the spread bristle sets by further pushing the punch into the die to form a shaft hole.

As the annular hub positioned at the centre of the brush is reinforced by the distance ring, even though a thin strand is used as a brush material, the strength of the elementary part of the strands can be sustained, which reduces conventional problems such as torn or lost strands.

## Description

### BACKGROUND OF THE INVENTION

### [Field of the Invention]

The present invention relates to a method of manufacturing a bristle unit of a rotating toothbrush, a rotating brush manufactured by this method, and a toothbrush adapting this rotating brush

### [Prior Art]

A toothbrush used for removing or preventing bacterial plaque and dental calculus, which form on teeth and gums, is the most important and commonly used instrument among dental cleaning tools.

A toothbrush is mainly categorized into a manual toothbrush and an electric toothbrush. A "toothbrush", in general, refers to a manual toothbrush.

This toothbrush consists of a brush head into which bristles made of natural hair or synthetic filaments such as nylon yarn are implanted, a handle, and a neck shank connecting the head and the handle. Tuft holes into which a number of bristles have been implanted are provided at the brush head. In general, each bristle is folded in a U-shape in such a manner as to be plunged into the tuft holes and to be fixed horizontally so as to be implanted approximately vertically or radially (in a flabelliform). The configuration of the bristle-implanted part, i.e., the bristle unit of the brush head, when viewed laterally from the side can be roughly classified into three types, that is, a linear type where the brushing plane is parallel to the brush head, a convex curving type, and a concaving type. Furthermore, a tuft type and an inclined type may be seen on the market. The implant condition of the bristle unit can be categorized into non-dense bristles in which the bunches of bristles are spaced apart from each other and dense bristles in which the bunches of bristles are spaced close to each other. For the non-dense bristles, the number of rows of the bristle bunches is between one and three and the number of the bristle bunches is between six and 27 while the dense bristles refer to those having four or more rows.

In order to brush the teeth, generally, while holding the handle, the user rubs the bristles across all the surfaces of each tooth side to side, up and down, brushes back and forth with wide strokes or rotation so as to remove bacteria plaques and to massage gums with gentle pressure.

The toothbrush with non-dense bristles tends to repel water and dry easily, which is effective to retain hygiene. On the other hand, a dense bristle brush is considered to be preferable for brushing methods using the edge of the brush for cleaning, for example, between teeth and gums.

In recent years, the trend has shifted to newly developed types, a so-called "rotating toothbrush" or "rolling toothbrush," in which a brush hole is arranged at the end of a handle in a rotatable manner in the direction perpendicular to the axis of the handle as disclosed, for example, in JP Utility Model No.59-41125(A), JP Patent Unexamined Publication No. 3-23808 or JP Patent Unexamined Publication No.2000-83736.

In this case, a "rotating toothbrush" typically comprises a brush comprising a plurality of fibre bundles arranged in a radial fashion around a shaft hole in such a manner as to form a disc shape and then the thus formed discs are accumulated to have a wheel shape, which is then rotationally supported by a spindle provided at one end of the handle member.

A method of manufacturing a wheel-shaped rotating toothbrush is described in, for example, JP Patent unexamined publication No.2003-88424, JP Patent unexamined publication No.2003-111618, JP Patent unexamined publication No.2003-220080, JP Patent unexamined publication No.2003-219911 or JP Patent unexamined publication No.2003-289947.

The aforementioned method of manufacturing a wheel-shaped rotating toothbrush comprises protruding a pre-determined amount of strands comprising a plurality of fibre strands aggregated as a tuft upwardly from a hole arranged on a pedestal wherein the sets of strands are fixed to spread radially by inserting a cone into a centre part wherein the centre part of the sets of strands is welded circularly to form a toroidal welded part, thus forming a sheet-like bristle unit having a plurality of strands extending radially from the toroidal elementary part. Then, a plurality of the thus manufactured sheet-like bristle units are accumulated, welded or adhered to each other to integrally form a wheel-shaped rotating toothbrush.

In the wheel-shaped rotating toothbrush manufactured by the aforementioned conventional method, the sheet-like bristle units are not rotatable with each other, having been accumulated and welded or adhered integrally, and each bunch of bristles is dense, packed close to each other. As a result, it is difficult to drain water and dry the toroidal elementary part of each bristle unit. It is also unsanitary because plaques caught among bristles cannot be rinsed off completely as they are implanted so closely to each other. Furthermore, when a thin bristle is used, the welding strength of the toroidal elementary part of each sheet-like bristle unit may be so insufficient that they tend to be dislodged or torn.

### [Prior Art Documents]

Non-patent Document 1: "Toothbrush encyclopedia" 3rd edition, Y. Matsuda and I. Kondo, Gakken-shoin, October, 2002.
Patent Document 1: Design Patent Registration No.1066543
Patent Document 2: Utility Model Publication No.59-41125-A
Patent Document 3: Utility Model Publication No.63-120929-A
Patent Document 4: Utility Model Registration No.3104356
Patent Document 5: Patent Unexamined Publication No.03-23808
Patent Document 6: Patent Unexamined Publication No.2000-83736
Patent Document 7: Patent Unexamined Publication No.2003-88424
Patent Document 8: Patent Unexamined Publication No.2003-111618
Patent Document 9: Patent Unexamined Publication No.2003-220080
Patent Document 10: Patent Unexamined Publication No.2003-219911
Patent Document 11: Patent Unexamined Publication No.2003-289947

### SUMMARY OF THE INVENTION

### [Problems solved by the invention]

The present invention provides an improved method of manufacturing a wheel-like bristle unit that can solve or reduce the problems caused by the conventional rotating brushes. Another object of the.present invention is to provide a rotating brush manufactured by using the aforementioned sheet-like bristle unit.

### [Means for solving the problems]

The present invention of claim 1 provides a method of manufacturing a sheet-like bristle unit for a rotating brush wherein a plurality of the bristle units are accumulated to form the rotating brush, said method comprising:
grasping a plurality of bristle sets comprising a number of fibre strands made from a thermoplastic resin aggregated as a tuft by a chuck;
penetrating a predetermined amount of the bristle sets downwardly into a hole arranged at a die to be held;
spreading the bristle sets in a radial fashion by pushing a punch having a diameter extending head into the bristle sets through the hole arranged at a welder provided at the lower part of the die;
lifting the welder from the position beneath the centre part of the spread bristle sets;
adhering the centre part of the bristle sets and an opposing part of a distance ring wherein the centre part of the spread bristle sets are overlapped with the distance ring made from a thermoplastic resin provided on the top surface of the welder to form a circular hub ring-reinforced at the centre of the bristle sets, and
cutting the elementary part of the spread bristle sets by further pushing the punch into the die to form a shaft hole.

The present invention of claim 2 provides a method of manufacturing a rotating brush comprising:
accumulating a predetermined number of the sheet-like bristle units defined in claim 1 in such a manner as to interpose the distance ring having a predetermined thickness therebetween, and
penetrating a pin into the shaft hole provided at each of the hubs so that each bristle unit can rotate around the pin.

The present invention of claim 3 provides a rotating toothbrush wherein the rotating brush manufactured by the method defined in claim 2 is mounted on one end of a handle.

According to the invention of claim 1, a sheet-like bristle unit can be produced efficiently. In addition, as the annular hub positioned at the centre of the brush is reinforced by the spacing ring, even when a thin strand is used as a brush material, the strength of the elementary part of the strands can be sustained, which dissolves typical problems such as torn or lost strands.

According to the invention of claim 2, a space between the bristle units can be adjusted by modifying the thickness of the spacing ring.

Furthermore, as the bristle units overlapping with each other are not fixed, each unit can rotate individually.

As a result, the elementary part of the rotating brush manufactured by using the bristle units according to claim 1 or 2 can strain water well, and is easy to dry and to keep clean. In addition, the invention can provide a rotating toothbrush which makes it easier to remove fouling debris such as plaque.

### BRIEF DESCRIPTION OF THE DRAWINGS

Fig. 1 is a side view of the rotating toothbrush 100 of the present invention;
Fig. 2 is a section view showing the main parts of the rotating toothbrush of Fig. 1;
Fig.3 illustrates the first process of the method of manufacturing the sheet-like bristle unit 10;
Fig.4 illustrates the state where the head of the punch 6 is pressed against the bottom of the fibre bundles (sets of strands) 2 by lifting the punch 6 from beneath the welder 5 through the penetrating hole 5A provided at the welder;
Fig.5 illustrates the process where the fibre bundles extending downward from the die 4 are spread in a radial fashion by lifting the diameter extending head 6A;
Fig.6 illustrates the state where the fibre bundles spread in the radial pattern are pressed vertically by the die 4 and the lifted welder 5;
Fig.7 illustrates the state in which the diameter extending head 6A has been removed from the punch 6;
Fig. 8 illustrates the process of providing the circular shaft hole by cutting the centre part of the annular hub 9 formed at the elementary part of the sets of strands at the inner circumference of the ring 7 by further pushing the head of the punch 6 into the die 4;
Fig.9 is an explanation view showing the process of taking out the sheet bristle unit 10 by lowering the welder 5 and the punch 6;
Fig.10 is an expanded sectional view of the welder 5;
Fig.11 is a perspective view illustrating the sheet-like bristle unit having the annular hub 9 wherein a part of the unit is cut away;
Fig. 12 is a section view showing the rotating brush 20 wherein a plurality of the sheet-like bristle units are suitably accumulated in such a manner as to interpose the distance ring having a predetermined thickness therebetween wherein the sleeve 11 is inserted in the shaft hole 12 formed at each hub.

### BEST MODE OF CARRYING OUT THE INVENTION

The present invention will be best understood from the following description of specific embodiment(s) when read in connection with the accompanying drawings. However, it will be understood that the present invention is not limited to those embodiment(s).

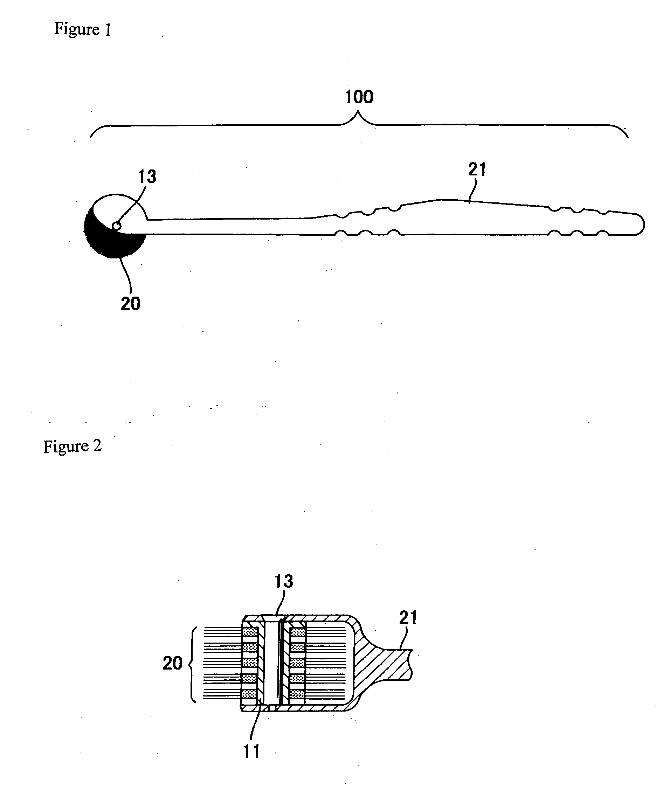

Fig. 1 is a side view of a toothbrush of the present invention and Fig. 2 is a section view showing the main parts of the toothbrush. Reference numeral 20 denotes a rotating brush arranged at one end of a handle of the toothbrush 21.

This rotating brush 20 is formed by accumulating a plurality of sheet-like (two-dimensionally radial) bristle units 10 in such a manner as to interpose a distance ring 7, and then penetrating a pin into a shaft hole of the bristle units. Then, the rotating brush 20 supported by the axis of a pin 13 is mounted on one end of a handle 21 of the toothbrush in a rotational manner to produce the toothbrush 100 as shown in the drawings.

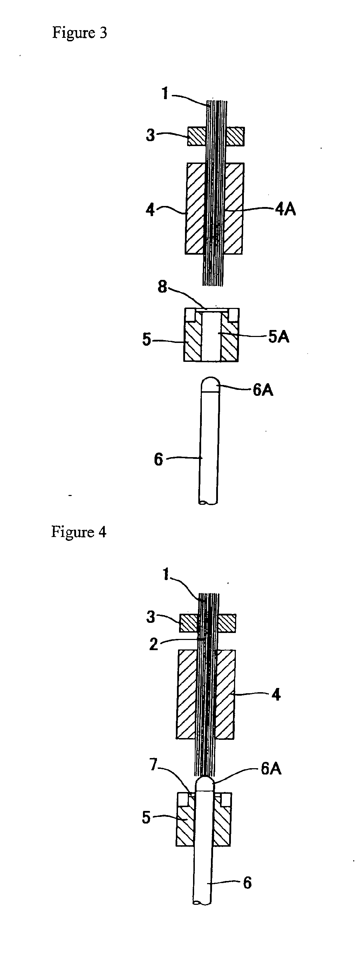

Figs 3-9 illustrate each process of manufacturing the sheet-like bristle units 10 in accordance with the method of the present invention.

Fig.3 illustrates the first process of the method of manufacturing the sheet-like bristle unit 10. As one example, sets of strands 2 comprising a plurality of strands comprising a synthetic monofilament 1 made from, for example, nylon or polyethylene having a diameter of 0.1-0.3 mm may be aggregated as a bundle, grasped by a chuck 3 so that a predetermined amount of the strand sets can be held and extended downward from a hole 4A provided at a die 4. Reference numeral 5 denotes a welder arranged at the lower part of the die 4 and has a penetrating hole 5A through which a punch 6 can move up and down.

The chuck 3 is arranged operable to grasp, detach and extrude the fibre bundles (strand sets) 2. The rod-shaped punch 6 associated with the die 4 can move up and down to be in contact with the die 4. A diameter-extending head 6A for radially pushing apart the bristle sets extending from the bottom of the die 4 is mounted on the head of the punch 6 in a detachable manner. In Fig. 3 the diameter-extending head 6A has an approximate semicircle shape. However, the shape of the diameter-extending head is not limited to an approximate semicircular but may have any shape that can radially push apart the strand bundles (bristle sets) 2 grasped by the chuck 3. For example, it can have a conical shape.

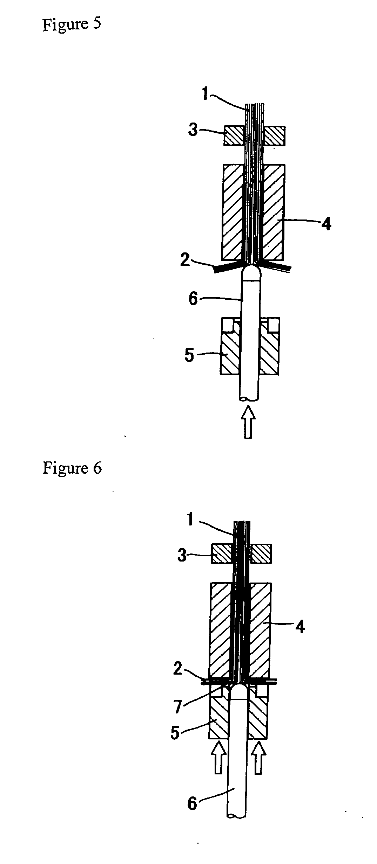

Fig. 4 illustrates the state where the head of the punch 6 is pressed against the bottom of the fibre bundles (bristle sets) 2 by lifting the punch 6 from beneath the welder 5 through the penetrating hole 5A provided at the welder. Fig.5 illustrates the process where the fibre bundles 2 extending downward from the die 4 are pushed apart in a radial fashion by further lifting the diameter-extending head 6A of the punch 6 toward the bundles.

Fig.6 illustrates the state where the fibre bundles pushed apart radially are pressed from above and below by the die 4 and the lifted welder 5 so that the centre part of the strand bundles 2 and an opposing part of the spacing ring 7 are deposited with each other by the welder 5 as described below.

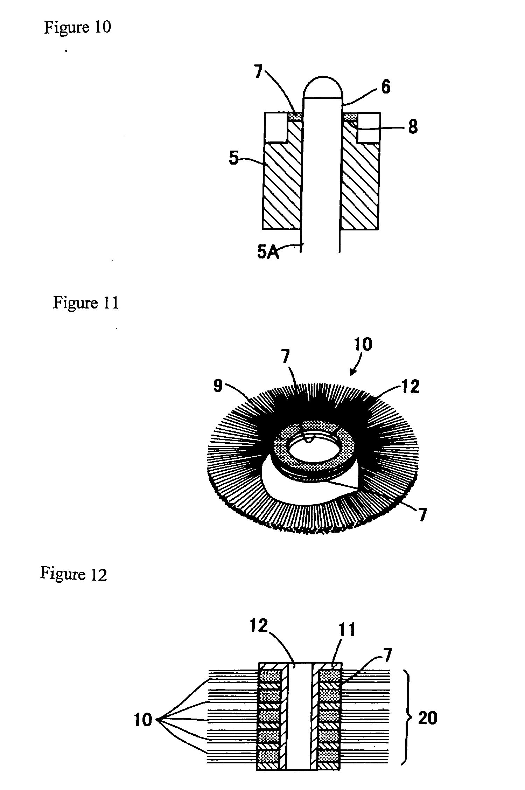

An ultrasonic welder or a high-frequency welder is preferred for use as the welder 5. Fig.10 is an expanded sectional view of the welder 5 wherein a penetrating hole 5A through which the rod-shaped punch 6 moves vertically is provided at the centre part of the welder. In addition, a hole 8 for setting the circular distance ring 7 is provided on the upper surface of the welder.

An O-ring comprising rigid plastic materials such as acrylonitrile styrene, polyethylene, or polypropylene having a diameter of 5-7 mm and thickness of 1-2 mm can be used as the spacing ring 7.

As shown in Fig. 10, this spacing ring 7 is set within the hole 8 arranged at the centre of the welder 5 in such a manner as to oppose to the centre part of the pushed apart strand bundles (bristle sets) 2.

The welder 5 is operable to adhere by heat the distance ring 7 and the interface of the strand bundles (bristle sets) 2 pushed apart in a radial fashion opposing to the ring. This welding means an annular hub 9 reinforced by the ring can be formed at the base part of the strand bundles (bristle sets) 2.

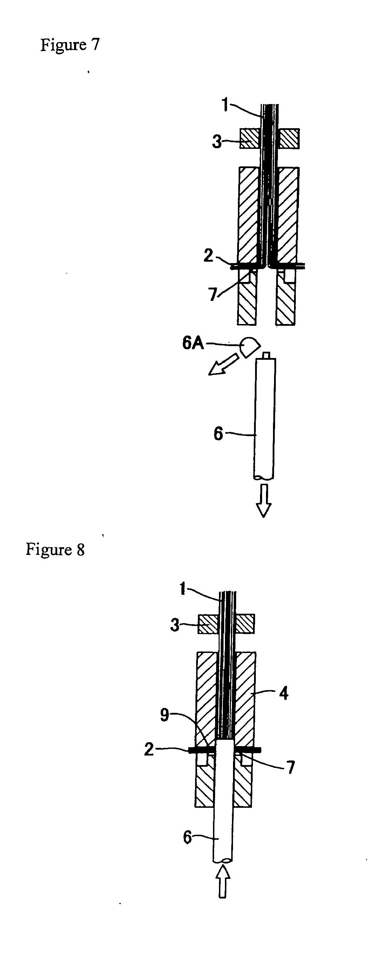

Figs. 7 and 8 illustrate the process of providing a circular shaft hole 12 by cutting the centre part of the annular hub 9 formed at the elementary part of the pushed apart strand bundles (bristle sets) 2 at the inner periphery of the ring 7 by further pushing the head of the punch 6 into the die 4. In this case, the diameter-extending head 6A may be detached from the punch 6. Fig. 7 illustrates the state in which the diameter-extending head 6A has been removed from the punch 6. As shown in Fig. 8, raising the part of the punch 6 in such a manner as to immerse it in the die 4 allows the centre section of the pushed apart bristle sets 2 to be circularly perforated so as to leave the annular hub 9 that has been ring-reinforced. In this case, the chuck 3 should be loosened so that the strand bundles (bristle sets) 2 can move back.

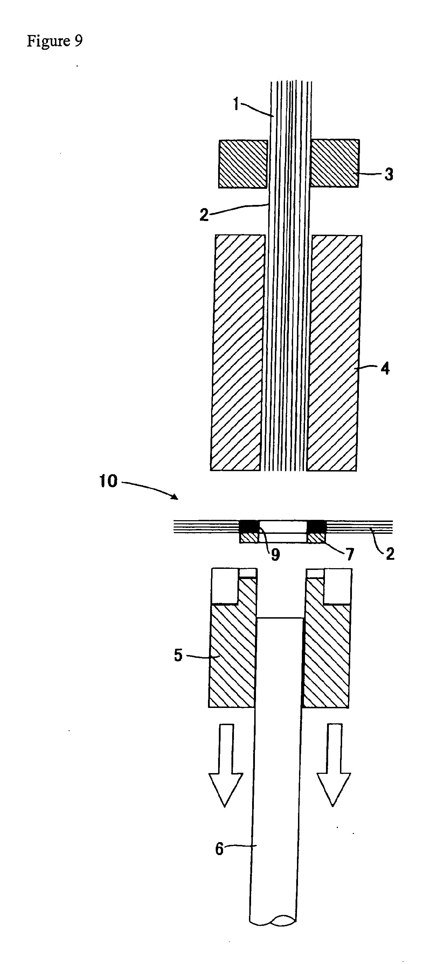

Then, the welder 5 and the punch 6 are lowered to take out the sheet-type bristle units 10 as shown in Fig. 9.

Fig.11 is a perspective view illustrating the sheet-like bristle unit 10 having the ring-reinforced annular hub 9 produced by the aforementioned method.

Fig. 12 is a section view showing the rotating brush 20 wherein a plurality of the sheet-type bristle units 10 are suitably accumulated in such a manner as to interpose the distance ring having a predetermined thickness therebetween wherein a sleeve 11 is inserted in the shaft hole 12 provided at each hub. Namely, each of the sheet-like bristle units 10 can rotate along the sleeve as shown in the drawing.

By inserting a pin 13 into the sleeve 11, the rotating brush 20 can be supported in a rotatable manner at one end of the handle 12 centering around the axis of the pin 12 as shown in Figs 1 and 2.

As described above, according to the present invention, sheet-like bristle units can be produced efficiently. In addition, the base part of each strand is so durable that the problems such as loss or tearing of a strand can be solved.

In addition, the present invention provides a toothbrush comprising a rotating brush formed by accumulating a plurality of these easy to drain and dry bristle units, which makes it easy to clean so that extraneous debris, such as plaques, can be removed easily.

## Claims

1. A method of manufacturing a sheet-like bristle unit for a rotating brush wherein a plurality of the bristle units are accumulated to form the rotating brush, said method comprising:
grasping a plurality of bristle sets comprising a number of fibre strands made from a thermoplastic resin aggregated as a tuft by a chuck;
penetrating a predetermined amount of the bristle sets downwardly into a hole arranged at a die to be held;
spreading the bristle sets in a radial fashion by pushing a punch having a diameter extending head into the bristle sets through the hole arranged at a welder provided at the lower part of the die;
lifting the welder from the position beneath the centre part of the spread bristle sets;
adhering the centre part of the bristle sets and an opposing part of a distance ring wherein the centre part of the spread bristle sets are overlapped with the distance ring made from a thermoplastic resin provided on the top surface of the welder to form a circular hub ring-reinforced at the centre of the bristle sets, and
cutting the base part of the spread bristle sets by further pushing the punch into the die to form a shaft hole.

2. A method of manufacturing a rotating brush comprising:
accumulating a predetermined number of the sheet-like bristle units defined in claim 1 in such a manner as to interpose the distance ring having a predetermined thickness therebetween, and
penetrating a pin into the shaft hole provided at each of the hubs so that each bristle unit can rotate around the pin.

3. A rotating toothbrush wherein the rotating brush produced by the method defined in claim 2 is mounted on one end of a handle.
